# EUROPÄISCHE PATENTANMELDUNG

(11) **EP 1 477 054 A1**
(43) Veröffentlichungstag der Anmeldung: **17.11.2004**
(21) Anmeldenummer: 04101759.1
(22) Anmeldetag: 27.04.2004
(51) Int. Cl.: A01D 34/00, B60R 9/06

(54) **Anbaueinrichtung, insbesondere in der Art eines Behälters**

(30) Priorität: 28.04.2003 US 424699
(71) Anmelder: DEERE & COMPANY, Moline, Illinois 61265-8098 (US)
(72) Erfinder: Powell, Matthew, Elmer, Fox Lake, Wisconsin 53933 (US); Hitt, Brian, James, Hartford, Wisconsin 53027 (US); Braun, Jeffrey, Robert, Colgate, Wisconsin 53017 (US)
(74) Vertreter: Holst, Sönke, Dr.

(57) **Zusammenfassung**

Fahrzeuge zur Rasen-, Garten- und Grundstückspflege wie Rasentraktoren und Aufsitzmäher sind übliche Arbeitsgeräte für Grundstücksbesitzer, Baumschulen bzw. Gärtnereien und Landschaftspfleger geworden.

Anbaueinrichtung (12), insbesondere in der Art eines Behälters, für ein Fahrzeug (10), vorzugsweise ein Fahrzeug zur Rasen-, Garten- bzw. Grundstückspflege mit einem Boden (34), welcher mit drei im Wesentlichen vertikalen Seitenwänden (38, 40, 42) verbunden ist, und mit einer vierten zwischen zweien der Seitenwände(38, 40, 42) verschwenkbaren Klappe (30). Die Klappe (30) kann eine erste Stellung, in der sie eine im Wesentlichen vertikal ausgerichtete Seitenwand bildet und mit den drei übrigen Seitenwänden (38, 40, 42) einen Stauraum begrenzt und wenigstens eine zweite Stellung einnehmen, in der sie sich im Wesentlichen horizontal erstreckt, um als Ablagefläche dienen zu können.

## Beschreibung

Die Erfindung betrifft eine Anbaueinrichtung, insbesondere in der Art eines Behälters für ein Fahrzeug, vorzugsweise ein Fahrzeug zur Rasen-, Garten- bzw. Grundstückspflege mit einem Boden, welcher mit drei im Wesentlichen vertikalen Seitenwänden verbunden ist, und mit einer zwischen zweien der Seitenwände verschwenkbar vorgesehenen Klappe.

Fahrzeuge zur Rasen-, Garten- und Grundstückspflege wie Rasentraktoren und Aufsitzmäher sind übliche Arbeitsgeräte für Grundstücksbesitzer, Baumschulen bzw. Gärtnereien und Landschaftspfleger geworden. Diese Fahrzeuge mit ihren angeschlossenen Mähwerken sind nützlich, um den Rasen und Garten zu pflegen.

Üblicherweise sind derartige Flächen mit Bodendeckern bzw. Büschen, Bäumen, Blumen und anderen Pflanzen besetzt, welche regelmäßige Pflege benötigen. Darüber hinaus bedürfen Gebäude, Zäune etc. einer regelmäßigen Wartung und Instandhaltung.

Um die hierfür notwendigen Geräte, Werkzeuge und Materialien zu transportieren, können bekannte Fahrzeuge mit Anbaueinrichtungen in der Art von Transportbehältern versehen werden.

Die der Erfindung zugrunde liegende Aufgabe wird darin gesehen, derartige Fahrzeuge zur Rasen-, Garten- und Grundstückspflege auch für Instandhaltungs- bzw. Wartungsarbeiten und zu Landschaftspflegearbeiten, welche über ein Mähen und einen Transport hinausgehen, einsetzbar zu machen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Anbaueinrichtung für ein Fahrzeug, insbesondere ein Fahrzeug zur Rasen-, Garten- bzw. Grundstückspflege, beispielsweise in der Art eines Rasentraktors, insbesondere eines Rasentraktors mit Heckauswurf, oder auch eines Aufsitzmähers etc., zur Verfügung gestellt, welche derart ausgebildet ist, dass eine Bedienungsperson das Fahrzeug für Wartungs- und Instandhaltungssarbeiten und auch zur Landschaftspflege einsetzen kann.

Diese Anbaueinrichtung ist vorzugsweise in der Art eines Transportbehälters ausgestaltet bzw. weist einen Stauraum auf, welcher es erlaubt, verschiedene Materialien zur Landschaftspflege bzw. für den Gartenbau, wie Erde, Mulch, Sand, Kies, Pflanzen und Sträucher zu transportieren.

Hierzu ist eine Heckklappe bzw. allgemein eine Klappe vorgesehen, welche aus einer ersten Stellung, in der sie als eine vorzugsweise rückwärtige Seitenwand der Anbaueinrichtung bzw. eines Transportsbehälters oder eines Stauraums dient, in eine zweite Stellung, vorzugsweise nach vorn, verschwenkt werden kann, in der sie zumindest im Wesentlichen horizontal ausgerichtet ist, in der sie sich auf den Seitenwänden abstützt und als eine Arbeitsfläche, in der Art einer Werkbank oder Arbeitsfläche, dienen kann. Wenn sich die Klappe in ihrer zweiten Stellung befindet, kann sie für Arbeiten wie Einpflanzen, Umtopfen, Zuschneiden oder auch für Reparaturarbeiten verwendet werden.

Die Anbaueinrichtung kann darüber hinaus Schlitze, Löcher oder allgemein Aussparungen aufweisen, welche vorzugsweise an oberen Kanten der Seitenwände angeordnet und dazu geeignet sind, vorzugsweise kleinere Arbeitsgeräte oder Werkzeuge, wie Schaufeln, Rechen, Scheren oder (Motor-)Sensen bzw. Freischneider etc. aufzunehmen und zu halten.

In der Zeichnung ist ein nachfolgend näher beschriebenes Ausführungsbeispiel der Erfindung dargestellt. Es zeigt:
- Fig. 1: eine Anbaueinrichtung, welche am Heck eines Fahrzeugs, in der Art eines Rasentraktors vorgesehen ist,
- Fig. 2: eine vergrößerte perspektivische Ansicht der Anbaueinrichtung von links vorn betrachtet, mit Befestigungsmitteln zum lösbaren Anschluss der Anbaueinrichtung an das Fahrzeug,
- Fig. 3: eine heckseitige, perspektivische Ansicht der Anbaueinrichtung mit einer rückwärtigen Klappe in einer geschlossenen Stellung,
- Fig. 4: eine Darstellung entsprechend Figur 3, wobei die Klappe leicht angehoben dargestellt ist, um Haltemittel der Klappe außer Eingriff mit entsprechenden Aussparungen zu bringen,
- Fig. 5: eine vergrößerte perspektivische Darstellung einer Schwenkeinrichtung zwischen Seitenwänden der Anbaueinrichtung und der Klappe,
- Fig. 6: eine heckseitige Ansicht der Klappe und insbesondere der Aussparungen in einem unteren Bereich der Klappe, welche zur Aufnahme der Haltemittel geeignet sind,
- Fig. 7: eine perspektivische Ansicht der Anbaueinrichtung, wobei sich die Klappe in einer teilweise geöffneten und etwas verschwenkten Stellung befindet,
- Fig. 8: eine Darstellung ähnlich Figur 7, wobei die Klappe leicht nach oben geschwenkt ist,
- Fig. 9: eine Ansicht ähnlich den Figuren 6 und 7, in der die Klappe aber weiter nach vorn geschwenkt ist, und
- Fig. 10: eine Ansicht ähnlich Figur 9, in der die Klappe aber nun nach vorne in ihre zweite Stellung geschwenkt ist, in der sie als Arbeitsfläche oder Werkbank dient.

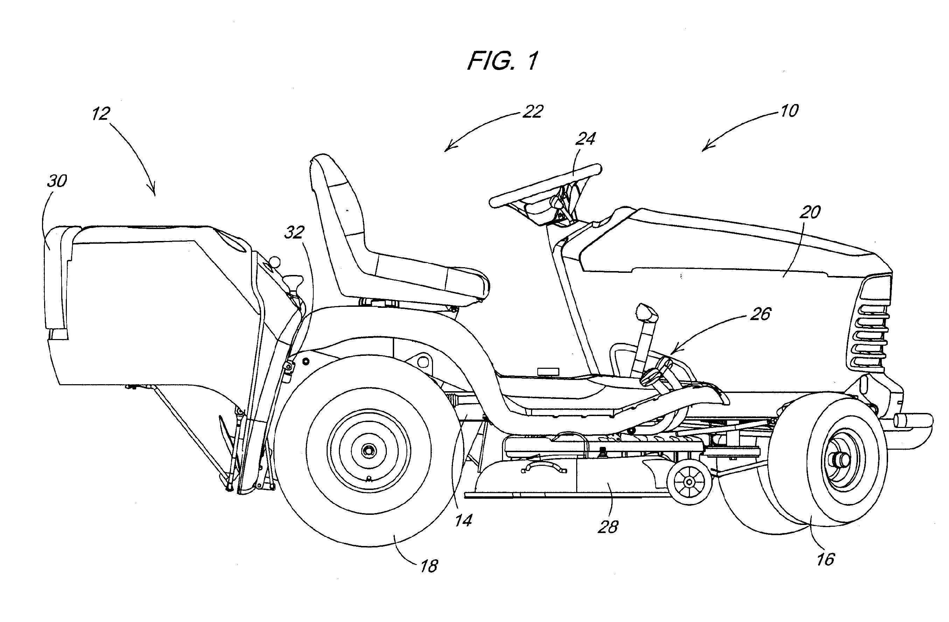

Es wird zuerst auf Figur 1 Bezug genommen, in der ein Fahrzeug 10 in der Art eines Traktors zur Rasen-, Garten bzw. Grundstückspflege mit einem Behälter bzw. einer Anbaueinrichtung 12 gemäß der vorliegenden Erfindung dargestellt wird.

Bei dem Fahrzeug 10 handelt es sich um einem typischen kleinen Rasentraktor, der einen Rahmen 14 aufweist, der sich auf vorderen, lenkbaren Rädern 16 und hinteren, antreibbaren Rädern 18 abstützt. In einem Frontbereich des Fahrzeugs 10 ist ein Motor angeordnet, welcher von einer Haube 20 umschlossen ist. Hinter dem Motor befindet sich eine Bedienerplattform 22 mit einem Lenkrad 24 und am Boden angeordneten Pedalen 26. Unterhalb des Fahrzeugs 10 und durch den Rahmen 14 abgestützt, ist ein Sichelmähwerk 28 angeordnet.

In einem Heckbereich des Fahrzeugs 10 ist die Anbaueinrichtung 12 angebracht. Diese Anbaueinrichtung 12 nimmt im Allgemeinen die Form eines kleinen Behälters bzw. eines Stauraums mit einer schwenkbaren Heckklappe bzw. einer hinteren Klappe 30 an.

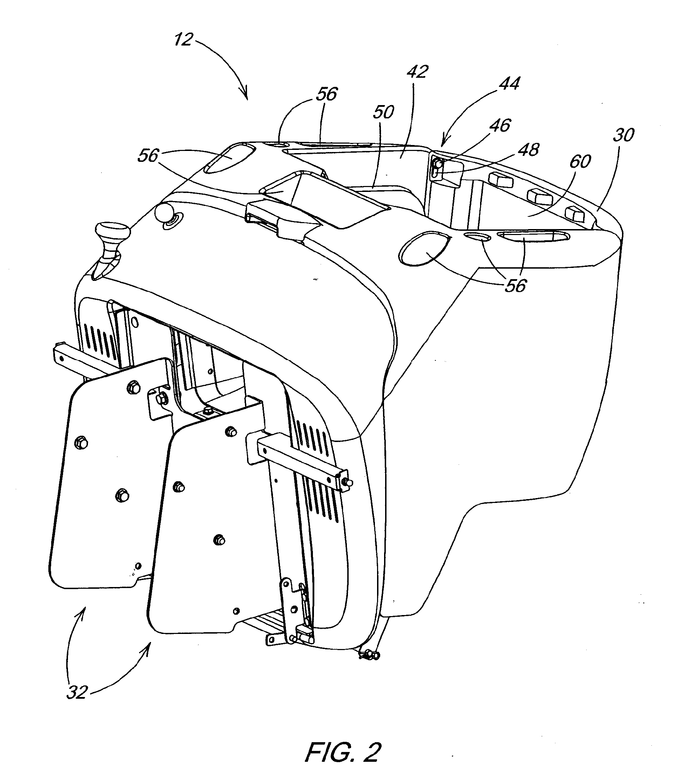

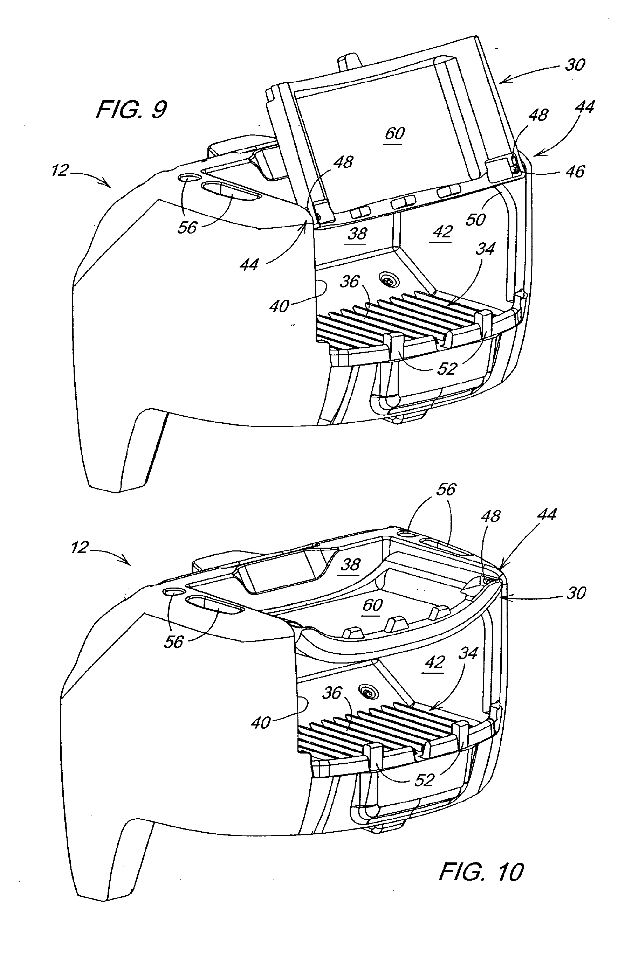

Es wird nun auch auf Figur 2 Bezug genommen, welche die Anbaueinrichtung 12 in einer perspektivischen Ansicht von vorne links zeigt, aus der ersichtlich wird, dass sie mit Befestigungsbeschlägen bzw. -mitteln 32 versehen ist, um sie entfernbar an dem Traktor bzw. Fahrzeug 10, welches in Figur 1 gezeigt wird, anzubringen. Den Figuren 9 und 10 kann entnommen werden, dass die Anbaueinrichtung 12 einen Boden 34 aufweist, welcher mit einem in Längsrichtung gerippten Bodenelement 36 versehen ist. Mit dem Boden 34 sind drei, sich im Wesentlichen vertikal erstreckende Seitenwände verbunden, welche eine vordere Seitenwand 38 und beabstandete und im Wesentlichen parallele, linke und rechte seitliche Seitenwände 40, 42 einschließen. Zusammen mit dem Boden 34 bilden diese drei Seitenwände 38, 40 und 42, sowie die Klappe 30 einen Stauraum oder Behälter.

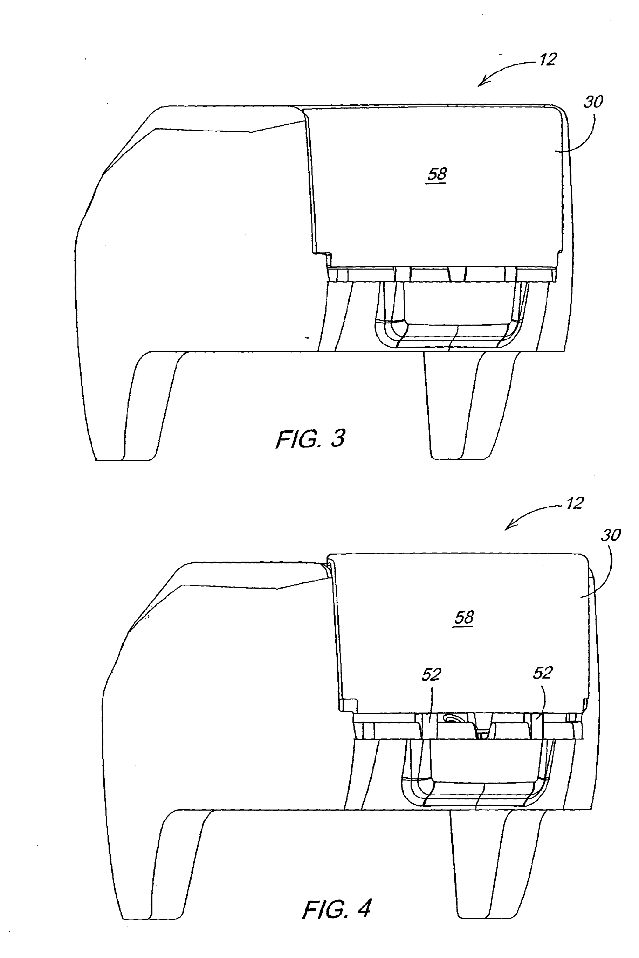

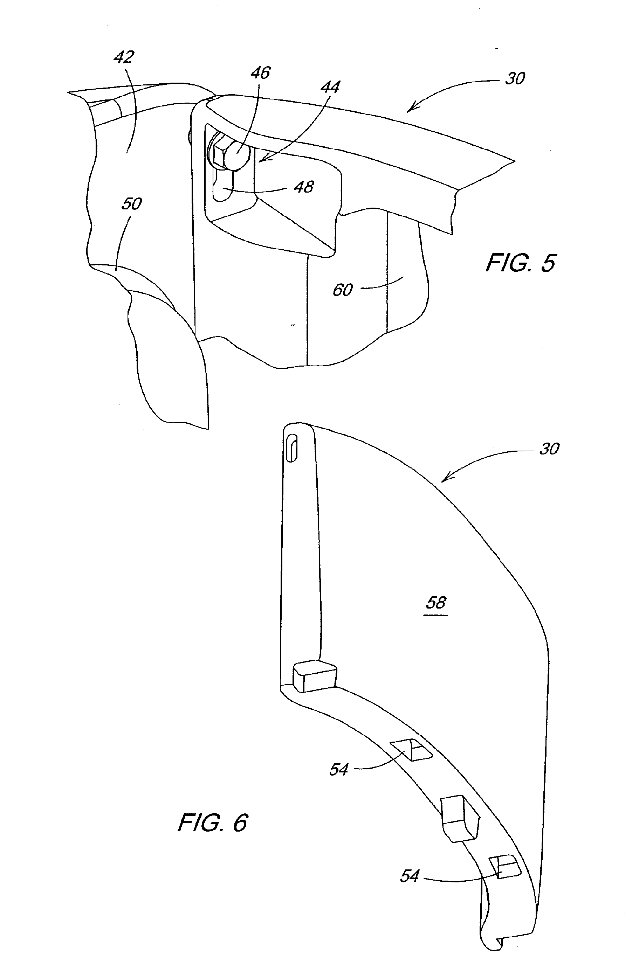

An jedem seitlichen und hinteren Eckbereich der oberen Kante der Klappe 30 befindet sich eine Schwenkeinrichtung 44 (siehe Figuren 2 und 5), welche es der Klappe 30 erlaubt, schwenkbar zwischen einer in Figur 3 gezeigten ersten Stellung und einer zweiten, in Figur 10 dargestellten Stellung bewegt zu werden. Die Schwenkeinrichtungen 44, welche am Besten in Figur 5 dargestellt werden, sind an jeder seitlichen, oberen Kante der Klappe 30 vorgesehen und weisen eine Schraube bzw. einen Bolzen 46 auf, der in der oberen, rückwärtigen Ecke jeder Seitenwand 40 und 42 angebracht ist, welche in einem Schlitz bzw. einer länglichen Aussparung 48 aufgenommen werden, welche in einer oberen, seitlichen Ecke der Klappe 30 vorgesehen ist. Es ist diese Schwenkeinrichtung, welche es der Klappe 30 erlaubt, aus der ersten in Figur 3 gezeigten Stellung in ihre zweite Stellung gemäß Figur 10 verschwenkt zu werden.

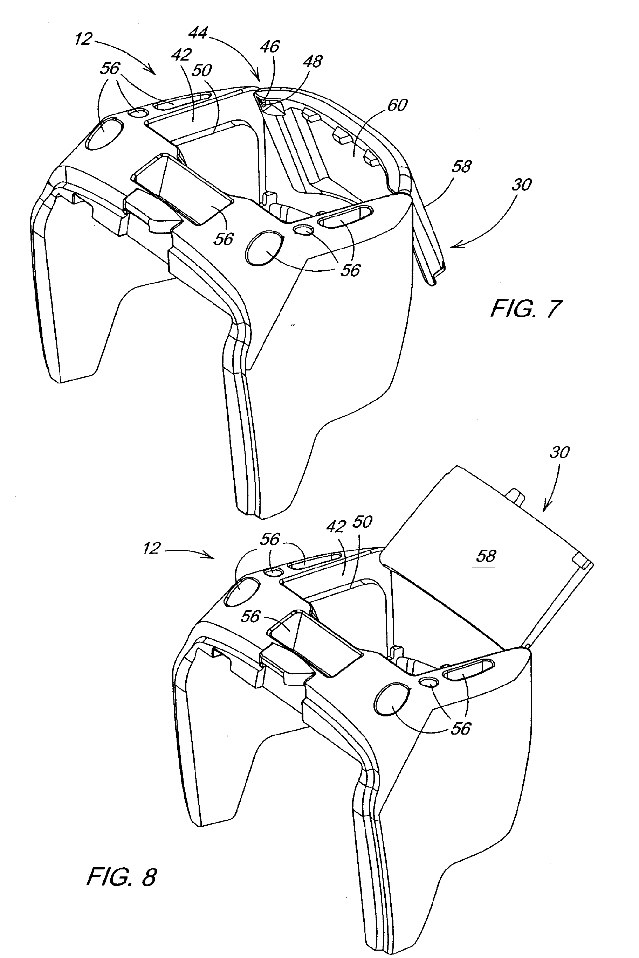

Wie es am Besten den Figuren 7 und 8 entnommen werden kann, sind an jeder Seitenwand 40 und 42 Stützelemente 50 vorgesehen, welche als Vorsprünge dienen, auf welchen die Klappe 30 abgestützt werden kann, wenn sie sich in ihrer zweiten, in Figur 10 dargestellten Position befindet.

Es werden nun wiederum die Figuren 4, 6, 8 und 9 betrachtet, in denen gezeigt wird, dass seitlich beabstandete Anschlusselemente bzw. Haltemittel 52 an einer rückwärtigen Kante des Bodens 34 vorgesehen sind. Diese Haltemittel 52 können durch Aussparungen 54 aufgenommen werden, die in der unteren Kante eines Bereichs der Klappe 30 vorgesehen sind, wie dies am Besten in Figur 6 dargestellt wird.

Entlang der oberen Kanten der ersten, zweiten und dritten Seitenwand 38, 40, 42 (siehe Figuren 2, 7, 9 und 10) sind Hohlräume bzw. Aussparungen 56 vorgesehen, in denen Werkzeuge bzw. Geräte, wie Schaufeln, Scheren und Rechen gehalten werden können. Da die bevorzugte Ausführungsform der Anbaueinrichtung 12 aus einem Verbundmaterial besteht, können Merkmale wie die Haltemittel 52, die Aussparungen 54 und die gerippten Bodenelemente 36 in einfacher Weise in den geplanten Aufbau integriert werden.

Im Betrieb würde die Anbaueinrichtung 12 an einem Fahrzeug 10, wie es in Figur 1 dargestellt ist, angebracht sein. Wenn sie verwendet wird, um Lasten wie Erde, Mulch, Sand, Kiesel oder andere Materialen zu transportieren, würde sich die hintere Klappe 30 in ihrer in Figur 3 gezeigten Stellung befinden, um ein geschlossenes Aufnahmebehältnis bzw. einen Stauraum zu bilden. Wenn die Anbaueinrichtung 12 mit der sich in dieser Stellung befindenden Klappe 30 verwendet wird, kann derartiges Material auf einem Rasen oder einem Einsatzort bewegt werden und Geräte bzw. Werkzeuge können zusätzlich in den Aussparungen an den oberen Seiten der drei Seitenwände 38, 40 und 42 befördert werden.

Wenn es gewünscht wird, die Fähigkeit diese Anbaueinrichtung 12 zu nutzen, zu erlauben als eine Werkbankeinheit bzw. als Arbeitsfläche, wie dies in Figur 10 gezeigt wird, benutzt zu werden, würde eine Bedienungsperson die Klappe 30 manuell aus der in Figur 3 dargestellten Stellung leicht nach oben in die in Figur 4 gezeigte Position bewegen. Wenn dies geschieht, lösen sich die Haltemittel 52 von den Aussparungen 54 in der Klappe 30, wenn die Schlitze nach oben entlang der Schrauben bzw. Bolzen 46 bewegt werden, siehe Figuren 2 und 5. Wenn die Anschlusselemente 52 gelöst sind, kann die Klappe 30 der Reihe nach um die Schwenkeinrichtung 44 in die durch die Figuren 6, 7, 8 und 9 illustrierten Stellungen in die endgültige Stellung gemäß Figur 10 gebracht werden. Wenn die Klappe 30 in die Stellung gemäß Figur 10 gebracht wird, wird ihre rückwärtige oder äußere Oberfläche 58, bei welcher es um die in Figur 3 sichtbare Fläche handelt, an den Stützelementen 50 anliegen, welche an den Seitenwänden 40 und 42 des Behälters 12 vorgesehen sind. Die zweite Oberfläche 60 der Klappe 30, welche die Innenfläche der Anbaueinrichtung 12 darstellt, wie es in den Figuren 2 und 7 sichtbar ist, steht dann zur Verfügung, um als eine Arbeitsfläche zu dienen, wie dies in Figur 10 dargestellt ist.

Wenn sich die Klappe 30 in der zweiten Stellung, welche in Figur 10 illustriert wird, befindet, hat die Bedienungsperson immer noch Zugang zu dem Ladegut, welches in dem Raum unterhalb der Klappe 30 befördert wird, da ein Zugang einfach möglich ist.

Wenn die Bedienungsperson die Klappe 30 in ihre erste, in Figur 2 gezeigte Stellung zurückführen will, schwenkt sie sie um ihre Schwenkstruktur in die in Figur 4 dargestellte Position und senkt sie dann in die in Figur 3 dargestellte Stellung ab, wenn dass Anschlusselement 52 in die Aussparungen 54 eingreift. Mit diesem Eingreifen ist die Klappe 30 in ihrer ersten Stellung gesichert.

Durch die Beschreibung der bevorzugten Ausführungsform wird es offensichtlich werden, dass verschiedene Veränderungen durchgeführt werden können, ohne von dem Bereich der Erfindung, wie er durch die beigefügten Ansprüche definiert wird, abzuweichen.

## Patentansprüche

1. Anbaueinrichtung (12), insbesondere in der Art eines Behälters, für ein Fahrzeug (10), vorzugsweise ein Fahrzeug zur Rasen-, Garten- bzw. Grundstückspflege mit einem Boden (34), welcher mit drei im Wesentlichen vertikalen Seitenwänden (38, 40, 42) verbunden ist, und mit einer zwischen zweien der Seitenwände(38, 40, 42) verschwenkbar vorgesehenen Klappe (30), **dadurch gekennzeichnet, dass** die Klappe (30) eine erste Stellung einnehmen kann, in der sie eine im Wesentlichen vertikal ausgerichtete Seitenwand bildet und mit den drei übrigen Seitenwänden (38, 40, 42) einen Stauraum begrenzt und wenigstens eine zweite Stellung einnehmen kann, in der sie sich im Wesentlichen horizontal erstreckt, um als Ablage- bzw. Arbeitsfläche dienen zu können.

2. Anbaueinrichtung nach Anspruch 1, **gekennzeichnet durch** eine Schwenkeinrichtung (44), welche es der Klappe (30) erlaubt, verschwenkt zu werden.

3. Anbaueinrichtung nach Anspruch 1 oder 2, **dadurch gekennzeichnet, dass** der Stauraum unterhalb der Klappe (30) zugänglich ist, wenn sich diese in ihrer zweiten Stellung befindet.

4. Anbaueinrichtung nach einem oder mehreren der vorherigen Ansprüche, **dadurch gekennzeichnet, dass** die zwei Seitenwände (40, 42) in einem oberen Bereich wenigstens ein Stützelement (50) aufweisen, auf welchem die Klappe (30) aufliegen kann, wenn sie sich in ihrer zweiten Stellung befindet.

5. Anbaueinrichtung nach einem oder mehreren der vorherigen Ansprüche, **dadurch gekennzeichnet, dass** die zwei Seitenwände (40, 42) voneinander beabstandet und zumindest im Wesentlichen parallel ausgerichtet sind, sowie sich zumindest im Wesentlichen vertikal erstreckende Kanten aufweisen, an welchen die Klappe (30) anliegen kann, wenn sie sich in ihrer ersten Stellung befindet.

6. Anbaueinrichtung nach einem oder mehreren der vorherigen Ansprüche, **gekennzeichnet durch** wenigstens ein Haltemittel (52) sowie wenigstens eine Aussparung (54) zur Aufnahme des Haltemittels (52), die dazu geeignet sind, ineinander einzugreifen, wenn die Klappe (30) in oder aus ihrer ersten Stellung bewegt wird, wobei das Haltemittel (52) vorzugsweise an dem Boden (34) und die Aussparung (54) an der Klappe (30) vorgesehen ist und/oder vorzugsweise zwei lösbar ineinander eingreifende Haltemittel (52) und Aussparungen (54) vorgesehen sind.

7. Anbaueinrichtung nach einem oder mehreren der vorherigen Ansprüche, **dadurch gekennzeichnet, dass** wenigstens eine der Seitenwände (40, 42) zumindest eine Aussparung (56) aufweist, welche geeignet ist, als eine Halterung für ein Werkzeug bzw. Gerät zu dienen.

8. Anbaueinrichtung nach einem oder mehreren der vorherigen Ansprüche geeignet zum vorzugsweise lösbaren Anbau an ein Heck eines Fahrzeugs (10), vorzugsweise eines Fahrzeugs zur Rasen-, Garten- bzw. Grundstückspflege.

9. Anbaueinrichtung nach einem oder mehreren der vorherigen Ansprüche zumindest im Wesentlichen bestehend aus einem Verbundmaterial.

10. Anbaueinrichtung nach einem oder mehreren der vorherigen Ansprüche, **dadurch gekennzeichnet, dass** die Klappe (30) eine erste Oberfläche aufweist, welche in der ersten Stellung der Klappe (30) eine vierte Seitenwand des Stauraums und in der zweiten Stellung die Ablage- bzw. Arbeitsfläche bildet.
